(19) Europäisches Patentamt

European Patent Office

Office européen des brevets

(11) Publication number: **0 479 470 B1**

# EUROPEAN PATENT SPECIFICATION

(45) Date of publication of patent specification: **17.05.95**  (51) Int. Cl.⁶: **C09K 5/00**, C23F 11/12

(21) Application number: **91308679.9**

(22) Date of filing: **24.09.91**

(54) Corrosion-inhibited antifreeze/coolant composition.

| | |
|---|---|
| (30) Priority: **01.10.90 US 590739** | (73) Proprietor: **TEXACO CHEMICAL COMPANY**<br>**3040 Post Oak Boulevard**<br>**Houston,**<br>**Texas 77056 (US)** |
| (43) Date of publication of application:<br>**08.04.92 Bulletin 92/15** | |
| (45) Publication of the grant of the patent:<br>**17.05.95 Bulletin 95/20** | (72) Inventor: **Burns, Jeffrey Michael**<br>**2104 E. Anderson Lane,**<br>**Apt. 1406**<br>**Austin,**<br>**Texas 78752 (US)**<br>Inventor: **McCoy, David Ross**<br>**9202 Barkfield Drive**<br>**Austin,**<br>**Texas 78758 (US)** |
| (84) Designated Contracting States:<br>**DE FR GB** | |
| (56) References cited:<br>**EP-A- 0 099 598**<br>**EP-A- 0 318 429**<br>**DE-A- 3 416 857**<br>**US-A- 4 584 119** | |
| | (74) Representative: **Green, Mark Charles et al**<br>**Urquhart-Dykes & Lord,**<br>**91 Wimpole Street**<br>**London W1M 8AH (GB)** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates generally to a corrosion inhibitor and, more particularly, to the use of certain acids as corrosion inhibitors in aqueous solutions, such as an antifreeze/coolant composition.

Automobile engine cooling systems contain a variety of metals, including copper, solder (especially high lead solder), brass, steel, cast iron, aluminum, magnesium, and their alloys. The possibility of corrosive attack on such metals is high, due to the presence of various ions, as well as the high temperatures, pressures, and flow rates found in such cooling systems. The presence of corrosion products within the cooling system can interfere with heat transfer from the engine combustion chambers, which may subsequently cause engine overheating and engine component failure due to excess metal temperatures. See generally Fay, R. H., "Antifreezes and Deicing Fluids", *Kirk−Othmer Encyclopedia of Chemical Technology* (1978) Vol. 3, pp. 79-95.

Inasmuch as the trend towards improved fuel economy for automobiles has led to the increased use of lightweight materials, such as aluminum and magnesium alloys, for engine and cooling system components, the desire to inhibit or substantially eliminate the corrosion of these particular metal substrates has become an important objective of those skilled in the art.

It has been found that pitting and crevice corrosion are particularly prevalent in aluminum-containing cooling systems. Pitting of thin-walled automobile radiator tubes may lead to tube perforation; crevice corrosion at cylinder head packings or coolant hose connections may also occur. Both types of corrosion may lead to eventual coolant loss, with subsequent engine overheating and component failure. Other forms of localized corrosion, such as deposit attack from deposition of corrosion products, may also result.

Many conventional corrosion inhibitor additives used in automobile cooling systems do not provide adequate protection against the pitting, crevice, and deposit attack corrosion phenomena found with aluminum and various other metal alloys, such as high lead solder.

U.S. Patent No. 4,851,145 describes a corrosion-inhibited antifreeze/coolant composition, wherein the corrosion inhibitor includes a combination of (a) an alkylbenzoic acid or the alkali metal, ammonium or amine salt thereof, (b) a $C_8$ to $C_{12}$ aliphatic monobasic acid or the alkali metal, ammonium or amine salt thereof; and (c) a hydrocarbyl triazole.

U.S. Patent No. 4,587,028 describes non-silicate antifreeze formulations which include a corrosion inhibitor including an alkali metal salt of benzoic acid, an alkali metal salt of a dicarboxylic acid and an alkali metal nitrate.

U.S. Patent No. 4,584,119 describes an antifreeze composition including the dibasic salt of naphthalene dicarboxylic acid and, optionally, a triazole as a corrosion inhibitor.

U.S. Patent No. 4,389,371 describes an antifreeze composition which includes a corrosion inhibitor having an effective amount of a conventional corrosion inhibitor selected from the group consisting of the alkali metal carbonates, borax, the alkali metal dichromates, the alkali metal silicates, phosphorus acid, phosphoric acid, an alkali metal tungstate, benzotriazole, tolyltriazole, an alkali metal salt of benzoic or toluic acid, an alkali metal salt of a phenol, an alkanolamine and an organo-silicone compound in addition to an alkanolamine phosphate and a heterocyclic nitrogen-containing compound.

U.S. Patent Nos. 4,342,596 and 4,233,176 describe a non-petroleum based metal corrosion inhibitor prepared from aliphatic monobasic acids, certain aromatic acids, a lubricant, amines and water.

U.S. Patent Nos. 4,241,016; 4,241,014; 4,241,013; and 4,241,012 describe hydroxybenzoic acid in antifreeze compositions as a corrosion inhibitor.

U.S. Patent No. 3,425,954 describes a corrosion inhibitor including a mixture of an alkali metal salt of aromatic carboxylic acids (sodium benzoate), an alkali metal salt of nitrous acid (sodium nitrite), an alkyl ester of benzoic acid (butyl benzoate) and a stable compound having a triazole function (benzotriazole). The composition is incorporated in a carrier vehicle, such as propylene glycol, and is adapted to inhibit the corrosion of metals in the presence of hydrogen sulfide and carbon dioxide by direct contact or as a vapor phase inhibitor.

U.S. Patent Nos. 4,501,667, 4,402,907, and 4,366,076 describe alkylbenzoic acids, such as 4-tert-butylbenzoic acid are useful as metal corrosion inhibitors.

U.S. Patent No. 4,552,678 describes a corrosion inhibitor obtained from the reaction product of a polyamine, an anhydride, and an organic acid of the formula $R_2$-COOH where $R_2$ may be H, a $C_1$ to $C_{12}$ alkyl, a $C_1$ to $C_5$ hydroxyalkyl, phenyl, tert-butyl, phenyl, or styryl radical.

U.S. Patent No. 3,769,214 describes an aqueous lubricant composition containing a minor amount of a metal anti-staining agent and stability improver which is an alkanolamine salt of a carboxylic acid having at least 12 carbon atoms per molecule.

EP 0 479 470 B1

U.S. Patent No. 2,832,742 describes the use of a blend of the diethanolamine salts of p-tert-butylbenzoic acid and a high molecular weight $C_7$ to $C_{18}$ aliphatic carboxylic acid mixture derived from an oxidized, petroleum fraction.

Japanese Patent No. 59208082 describes a method of inhibiting corrosion in a cooling water system for an internal combustion engine via addition of a corrosion inhibitor containing a water soluble amine salt of benzotriazole, a water soluble amine salt of t-butylbenzoic acid, a nitrite, and a benzoate to the cooling water.

U.K. Patent Application No. 2,122,598 describes a process and composition for resisting corrosion. The composition comprises (a) at least one $C_6$ to $C_{10}$ aliphatic carboxylic acid, (b) at least one $C_6$ to $C_8$ polyhydroxycarboxylic acid, and (c) at least one aromatic monocarboxylic acid, each of the acids being present as a salt with a salt-forming cation.

API Primary Petroleum Products Abstract No. 76-20709 describes French Patent No. 2268791, which discloses a water-soluble ferrous metal corrosion inhibitor which is the condensation product of a $C_1$ to $C_6$ para-alkylbenzoic acid and an alkanolamine.

U.S. Patent No. 4,497,702 describes amide reaction products of polyalkylene polyamines and neo-acids. The reaction products are said to be useful to inhibit the corrosion of equipment in which petroleum or chemicals are produced or processed.

EP-A-0318429 (Ciba-Geigy) describes water-based anticorrosive coolants containing hydroxycarboxylic acids or diacids.

DE-A-3416857 (BASF) describes water-based cooling systems containing phenoxy alkyl carboxylic acids and aliphatic monocarboxylic acids as well as aliphatic diacids.

Accordingly, the present invention relates to an antifreeze composition comprising a major portion of a liquid alcohol freezing point depressant and a minor portion of at least one acid selected from the group comprising neopentanoic acid, isononanoic acid, neoheptanoic acid, dimethylglutaric acid, diethylmalonic acid, 2-ethylbutyric acid, and methylvaleric acid.

In another embodiment, the present invention relates to a process for inhibiting the general pitting, crevice and deposit attack corrosion of metals present in the cooling system of an internal combustion engine which comprises intimately contacting the metal surface to be inhibited against corrosion with the antifreeze composition described above.

The novel corrosion inhibitor of the present invention comprises at least one of the acids described above used alone or in combination with conventional corrosion inhibitors.

The conventional corrosion inhibitors referred to above can include alkali metal borates, alkali metal silicates, alkali metal benzoates, alkali metal nitrates, alkali metal nitrites, alkali metal molybdates, hydrocarbyl thiazoles and mixtures thereof.

An additional corrosion inhibitor which may optionally be employed in admixture with one or more of the acids described above includes $C_8$ to $C_{12}$ aliphatic dibasic acid or the alkali metal, ammonium, or amine salt of said acid. For instance, the foregoing acids or salts can include one or more of the following: suberic, azelaic, sebacic, undecanedioic, dodecanedioic, the diacid of dicyclopentadiene, terephthalic and mixtures thereof. Sebacic acid is particularly preferred. Any alkali metal, ammonium, or amine may be used to form the dibasic acid salt; however, alkali metals are preferred. Sodium and potassium are the preferred alkali metals for use in forming the dibasic acid salt.

In the case where one or more of the acids are used in combination with the conventional and/or additional corrosion inhibitors referred to above, the resulting corrosion-inhibited antifreeze/coolant formulations can include from about 0.1 to about 5 weight percent of the acid(s) component and from about 0.1 to about 5 weight percent of the other component. Preferably, the resulting antifreeze coolant composition will include from about 1 to about 2 weight percent of the acid(s) component and from about 0.75 to about 1.25 weight percent of the other component.

The corrosion inhibitor of the instant invention will most typically be employed in antifreeze formulations as coolants for internal combustion engines. While the present corrosion-inhibitor substantially eliminates the corrosion of all metals found in engine cooling systems, it is particularly well suited for eliminating the corrosion of high lead solder and aluminum. Other applications may include hydraulic fluids, aqueous cutting oils, paints, soluble oils, metal cutting fluids, aircraft deicers, and greases. In these applications, the monobasic and dibasic acid salts may be formed with metal hydroxides including sodium, potassium, lithium, barium, calcium, and magnesium.

In one embodiment of the instant invention, the above-described corrosion-inhibitor, whether it be one or more of the present acids alone or in combination with the other corrosion inhibitors described above, is employed in admixture with water to form a corrosion-inhibited aqueous composition.

3

In a preferred embodiment of the instant invention, the above-described corrosion inhibitor is employed in admixture with a liquid alcohol freezing point depressant to form a novel antifreeze/coolant concentrate composition for use in the cooling systems of internal combustion engines. The antifreeze/coolant concentrate composition may comprise from about 80 to about 99, preferably from about 90 to about 99 weight percent of a water soluble liquid alcohol freezing point depressant and from about 20 to about 1 weight percent of the instant corrosion inhibitor.

The liquid alcohol freezing point depressant component of the above-described antifreeze/coolant concentrate composition may be a glycol or glycol ether. The glycol ethers which may be employed as major components in the instant invention include glycols, such as ethylene glycol, diethylene glycol, propylene glycol, dipropylene glycol; and glycol monoethers, such as the methyl, ethyl, propyl, and butyl ethers of ethylene glycol, diethylene glycol, propylene glycol, and dipropylene glycol. Ethylene glycol is particularly preferred as the liquid alcohol freezing point depressant component.

In another embodiment of the instant invention, the above-described corrosion-inhibited antifreeze/coolant concentrate composition is diluted with about 10-90 volume percent preferably about 25-75 volume percent of water.

The following Examples II - VIII are provided to further illustrate a specific embodiments of the present invention; they should not be construed as limiting the present invention in any way.

EXAMPLES I - VIII

In Comparative Example I, a non-inventive antifreeze/coolant composition was prepared for comparative purposes. In Examples II-VIII, seven corrosion-inhibited antifreeze/coolant compositions of the present invention were prepared. In all of the examples, the compositions were prepared by combining the components identified below in Table I. Each of the components were mixed at room temperature (± 16°C) and at a pressure between 91 to 111 kPa, Ethylene glycol was charged into a mixing vessel and was agitated while the remaining components were added in the following order: sodium hydroxide, tolyltriazole, deionized water, and the acid components.

TABLE I

| Component | Weight Percent Example No. | | | | | | | |
|---|---|---|---|---|---|---|---|---|
| | I | II | III | IV | V | VI | VII | VIII |
| Ethylene Glycol | 95.5 | 93.7 | 92.3 | 92.3 | 93.54 | 93.54 | 93.12 | 93.40 |
| NaOH (50% by weight in deionized water) | 0.8 | 1.6 | 2.4 | 2.4 | 1.6 | 1.6 | 1.6 | 1.6 |
| Sebacic Acid | 1.0 | 1 | 1 | 1 | 1 | 1 | 1 | 1 |
| Deionized Water | 2.5 | 2.5 | 2.5 | 2.5 | 2.5 | 2.5 | 2.5 | 2.5 |
| Tolyltriazole | 0.2 | 0.2 | 0.2 | 0.2 | 0.2 | 0.2 | 0.2 | 0.2 |
| Neopentanoic Acid | 0 | 1 | 0 | 0 | 0 | 0 | 0 | 0 |
| Dimethyl Glutaric Acid | 0 | 0 | 1.6 | 0 | 0 | 0 | 0 | 0 |
| Diethyl Malonic Acid | 0 | 0 | 0 | 1.6 | 0 | 0 | 0 | 0 |
| Methyl Valeric Acid | 0 | 0 | 0 | 0 | 1.16 | 0 | 0 | 0 |
| Ethyl Butyric Acid | 0 | 0 | 0 | 0 | 0 | 1.16 | 0 | 0 |
| Isononanoic Acid | 0 | 0 | 0 | 0 | 0 | 0 | 1.58 | 0 |
| Neoheptanoic Acid | 0 | 0 | 0 | 0 | 0 | 0 | 0 | 1.30 |

4

The corrosion behavior of the antifreeze/coolant compositions prepared in Examples I - VIII were- tested according to the ASTM D-1384 Glassware Corrosion Test.

Table II sets forth the results obtained. The smaller the weight loss of the metal coupon, the greater the corrosion inhibiting properties of a particular formulation. A negative weight loss signifies a weight increase due to the formation of a protective coating on the coupon.

TABLE II

| Metal/Metal Alloy | Example No. | | | | | | | | Typical Universal Antifreeze |
| | I | II | III | IV | V | VI | VII | VIII | |
|---|---|---|---|---|---|---|---|---|---|
| Copper | 1 | 2 | 2 | 1 | 2 | 2 | 0 | 2 | 5 |
| High Lead Solder | 120 | 0 | 0 | 3 | 64 | 1 | 120 | 1 | 71 |
| Brass | 0 | 2 | 2 | 2 | 1 | 2 | -1 | 1 | 3 |
| Sn/Pb Solder | -3 | 1 | -1 | 2 | -1 | -1 | -3 | -1 | -2 |
| Steel | -1 | 1 | 0 | 1 | 0 | 0 | -2 | -1 | -1 |
| Iron | -2 | -3 | -3 | 2 | -1 | -3 | -3 | -1 | 1 |
| Aluminum | 175 | 5 | 3 | 21 | 5 | 8 | 4 | 7 | 3 |

As these data demonstrate, the antifreeze/coolant formulation of the present invention (Examples II-VIII) exhibits excellent protection against the corrosion of aluminum and/or high lead solder substrates, relative to that exhibited by the formulation prepared in Comparative Example I and the typical universal antifreeze.

**Claims**

1. An antifreeze composition comprising a major portion of a liquid alcohol freezing point depressant and a minor portion of at least one acid selected from neopentanoic acid, isononanoic acid, neoheptanoic acid, dimethylglutaric acid, diethylmalonic acid, 2-ethylbutyric acid, and methylvaleric acid.

2. An antifreeze composition as claimed in Claim 1, comprising from 80 to 99 weight percent of said freezing point depressant and from 20 to 1 weight percent of said acid.

3. An antifreeze composition as claimed in Claim 1 or Claim 2, which further comprises a second corrosion inhibitor including alkali metal borates, alkali metal silicates, alkali metal benzoates, alkali metal nitrates, alkali metal nitrites, alkali metal molybdates, hydrocarbyl thiazoles, and mixtures thereof.

4. An antifreeze composition as claimed in Claim 1 or Claim 2, which further comprises a second corrosion inhibitor including a $C_8$ to $C_{12}$ aliphatic dibasic acid or the alkali metal, ammonium or amine salt of said acid.

5. An antifreeze composition as claimed in Claim 3 or Claim 4, wherein said acid is employed in an amount of from 0.1 to 5 weight percent and said second corrosion inhibitor is employed in an amount of from 0.1 to 5 weight percent.

6. A process for inhibiting the general pitting crevice and deposit attack corrosion of metals present in the cooling system of an internal combustion engine which comprises intimately contacting the metal surface to be inhibited against corrosion with an antifreeze composition as claimed in any one of the preceding claims.

7. A process as claimed in Claim 6, wherein said metal is high lead solder or aluminium.

5

**Patentansprüche**

1. Eine Frostschutzmittelzusammensetzung, die einen Hauptanteile einem flüssigen Alkohol-Gefrierpunktserniedriger und einen Nebenanteil an wenigstens einer Säure umfaßt, die ausgewählt ist aus Neopentansäure, Isononansäure, Neoheptansäure, Dimethylglutarsäure, Diethylmalonsäure, 2-Ethylbuttersäure und Methylvaleriansäure.

2. Eine Frostschutzmittelzusammensetzung nach Anspruch 1, die von 80 bis 99 Gewichtsprozent von besagtem Gefrierpunktserniedriger und von 20 bis 1 Gewichtsprozent von besagter Säure umfaßt.

3. Eine Frostschutzmittelzusammensetzung nach Anspruch 1 oder Anspruch 2, die außerdem einen zweiten Korrosionsinhibitor umfaßt, der Alkalimetallborate, Alkalimetallsilikate, Alkalimetallbenzoate, Alkalimetallnitrate, Alkalimetallnitrite, Alkalimetallmolybdate, Kohlenwasserstoffthiazole und Mischungen derselben einschließt.

4. Eine Frostschutzmittelzusammensetzung nach Anspruch 1 oder Anspruch 2, die außerdem einen zweiten Korrosionsinhibitor umfaßt, der eine $C_8$-$C_{12}$- aliphatische zweibasige Säure oder das Alkalimetall-, Ammonium- oder Aminsalz besagter Säure einschließt.

5. Eine Frostschutzmittelzusammensetzung nach Anspruch 3 oder Anspruch 4, wobei besagte Säure in einer Menge von 0,1 bis 5 Gewichtsprozent eingesetzt wird und besagter zweiter Korrosionsinhibitor in einer Menge von 0,1 bis 5 Gewichtsprozent eingesetzt wird.

6. Ein Verfahren zur Hemmung der allgemeinen Lochfraß-, Spalt- und Ablagerungsangriffskorrosion von Metallen, die im Kühlsystem eines Verbrennungsmotors vorhanden sind, welches inniges In-Kontakt-Bringen der Metalloberfläche, die vor Korrosion geschützt werden soll, mit einer Frostschutzmittelzusammensetzung nach einem der vorangehenden Ansprüche umfaßt.

7. Ein Verfahren nach Anspruch 6, wobei besagtes Metall Lot mit hohem Bleigehalt oder Aluminium ist.

**Revendications**

1. Composition d'antigel comprenant une partie majeure d'un dépresseur du point de congélation alcoolique liquide et une partie mineure d'au moins un acide choisi parmi l'acide néopentanoïque, l'acide isononanoïque, l'acide néoheptanoïque, l'acide diméthylglutarique, l'acide diéthylmalonique, l'acide 2-éthylbutyrique et l'acide méthylvalérique.

2. Composition d'antigel selon la revendication 1, comprenant de 80 à 99 % en poids dudit dépresseur du point de congélation et de 20 à 1 % en poids dudit acide.

3. Composition d'antigel selon la revendication 1 ou la revendication 2, qui comprend en outre un second inhibiteur de corrosion incluant les borates de métal alcalin, les silicates de métal alcalin, les benzoates de métal alcalin, les nitrates de métal alcalin, les nitrites de métal alcalin, les molybdates de métal alcalin, les hydrocarbyl thiazoles et les mélanges de ceux-ci.

4. Composition d'antigel selon la revendication 1 ou la revendication 2, qui comprend en outre un second inhibiteur de corrosion incluant un acide dibasique aliphatique en $C_8$ à $C_{12}$, ou le sel de métal alcalin, d'ammonium ou d'amine dudit acide.

5. Composition d'antigel selon la revendication 3 ou la revendication 4, dans laquelle ledit acide est employé en une quantité de 0,1 à 5 % en poids et ledit second inhibiteur de corrosion est employé en une quantité de 0,1 à 5 % en poids.

6. Procédé pour inhiber la corrosion générale en piqûres, en crevasses et d'attaque de dépôts, des métaux présents dans le système de refroidissement d'un moteur à combustion interne, qui comprend la mise en contact intime de la surface de métal devant être inhibée contre la corrosion avec une composition d'antigel selon l'une quelconque des revendications précédentes.

7. Procédé selon la revendication 6, dans lequel ledit métal est un métal à souder riche en plomb ou de l'aluminium.